# EUROPEAN PATENT SPECIFICATION

(11) **EP 1 245 874 B1**
(45) Date of publication and mention of the grant of the patent: **21.06.2006**
(21) Application number: 02007090.0
(22) Date of filing: 27.03.2002
(51) Int. Cl.: F16J 15/32, F16C 33/78

(54) **Low-cost seal assembly and relative production method**
Kostengünstige Dichtungsanordnung und Verfahren zu ihrer Herstellung
Dispositif d'étanchéité à faible coût et sa méthode de fabrication

(30) Priority: 29.03.2001 IT MI20010663
(43) Date of publication of application: 02.10.2002
(73) Proprietor: RFT S.p.A., 10121 Torino (IT)
(72) Inventor: Visconti, Alberto, 21100 Varese (IT)
(74) Representative: Plebani, Rinaldo

(56) References cited:
- EP-A- 0 922 890
- DE-A- 2 044 476
- US-A- 4 697 936
- US-A- 4 850 722

## Description

The present invention relates to a seal assembly and to a method of producing a seal assembly for insertion between two members in relative rotation, in particular the rings of a rolling bearing.

As is known, seal assemblies of the above type comprise an elastomeric element with sealing members, normally one or more sliding lips; and a normally metal supporting structure fitted to a supporting portion of, and for reinforcing, the sealing element to enable the lip/s to function. According to a method developed by the Applicant, the metal supporting structure is secured to the elastomeric supporting portion of the sealing element by a bonding process during curing, whereby the surface/s of the supporting structure to be fitted to the elastomeric part is/are coated with a "paint" comprising an adhesion promoter or "primer", and the elastomeric element is then molded on to the coated supporting structure in the form of a "green" i.e. not yet cured, mix. At the subsequent curing stage, the primer bonds chemically with the elastomer to achieve the desired degree of adhesion, which is superior to that obtainable using normal adhesive.

Though highly effective, the above method has the drawback of increasing the production cost of the seal assembly, by comprising a primer coating step, in addition to the molding/curing step which is necessary in any case. On the other hand, direct molding would not ensure sufficient adhesion of the elastomer to the supporting structure. EP-A-0 922 890 and DE-A-2 044 476 do not solve satisfactory this technical problem.

It is an object of the present invention to provide a seal assembly designed to eliminate the aforementioned drawbacks, and which, in particular, is cheap and easy to produce, is compact, and provides for relatively good sealing performance. It is a further object of the present invention to provide a low-cost method of producing such a seal assembly.

According to the present invention, there is provided a seal assembly as claimed in Claim 1.

According to the present invention, there is also ovided a low-cost method of producing a seal assembly comprising an elastomeric sealing element, and a apporting structure at least partly embedded in a apporting portion of the elastomeric sealing element; as defined in Claim 8.

This therefore provides for perfect, permanent adhesion of the elastomeric part of the supporting structure, with no need for applying primers, and with no impairment in the performance of the seal assembly, thus achieving the desired saving.

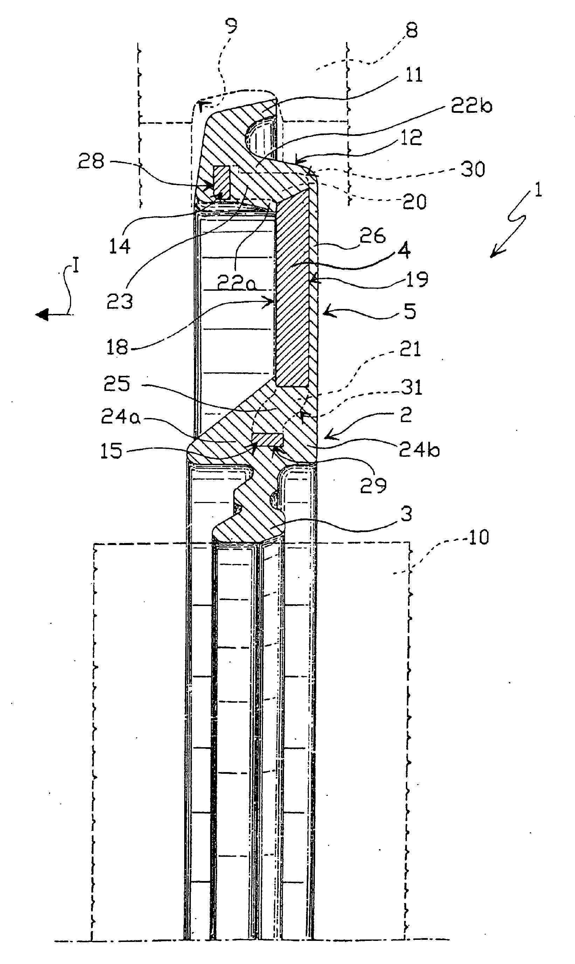

A non-limiting embodiment of the invention will be described by way of example with reference to the accompanying drawing showing a partial radial section of a seal assembly in accordance with the invention.

Number 1 in the accompanying drawing indicates as a whole a seal assembly comprising an elastomeric sealing element 2 having at least one sealing member defined, in the example shown, by a known annular lip 3; and an annular supporting structure 4 at least partly embedded in a supporting portion 5 of elastomeric sealing element 2. As shown schematically in the drawing, seal assembly 1, in use, is insertable in known manner between two members 8, 10 (shown by the dash lines) in relative motion : in the non-limiting example shown, two relatively rotating members, such as the outer and inner rings of a rolling bearing, or, more generally, a rotating seat 8 for a shaft 10.

In the example shown, seat 8 comprises a seat 9 for seating in static sealing manner a known peripherally outer connecting portion 11 of elastomeric element 2, projecting radially from a root portion 12 forming part of supporting portion 5.

Supporting structure 4 comprises opposite peripheral annular portions: one radially outer 14, and one radially inner 15; and opposite radial faces 18, 19 frontally defining both peripheral annular portions 14, 15. According to the invention, supporting structure 4 has a first number of through perforations 20 (only one shown) formed in a ring through radially outer portion 14; and a second number of through perforations 21 (only one shown) similar to perforations 20 and formed in a ring through radially inner portion 15 of supporting structure 4.

Combined with the above structural characteristic of supporting structure 4, supporting portion 5 of elastomeric element 2 comprises, at portion 14 of supporting structure 4, retaining portions 22a, 22b molded on to respective faces 18 and 19. Portions 22 may be continuous annular portions of elastomeric element 2, covering substantially the whole portion of faces 18, 19 defining peripheral portion 14 of supporting structure 4, or may be discontinuous annular portions of element 2, e.g. formed in a ring adjacent to perforations 20; and perforations 20 may be of any form and, in the example shown, are defined by radial slits through supporting structure 4.

According to the invention, retaining portions 22a on face 18 are connected integrally to respective portions 22b on face 19 by respective braces 23 also forming an integral part of supporting portion 5 of elastomeric element 2, and which, according to the invention, are molded directly inside and fill perforations 20. Portions 22 are formed as part of root portion 12 of connecting portion 11.

Similarly, the radially inner portion 15 of supporting structure 4 has, molded on to faces 18, 19, respective retaining portions 24 of elastomeric element 2 similar to retaining portions 22. More specifically, retaining portions 24a are molded on to face 18, and retaining portions 24b on to face 19; and portions 24a are connected to the corresponding portions 24b by respective braces 25 similar to braces 23, and which are molded inside and fill perforations 21 (similar to perforations 20).

Finally, supporting portion 5 of elastomeric element 2 comprises one or more integral braces 26, which is/are formed in contact with face 19 to connect portions 22b to respective portions 24b. If one brace 26 is provided, this will be annular to connect all of any discontinuous portions 22b to respective discontinuous portions 24b, and to cover the whole of face 19 left exposed by discontinuous portions 22b and 24b. Alternatively, to save rubber, a number of braces 26 may be formed, arranged radially in a ring to cover only part of face 19, provided each discontinuous annular portion 22b is connected to the corresponding discontinuous annular portion 24b.

According to the method of the invention, the structure described is formed by molding a green elastomeric mix directly on to the supporting structure, without applying adhesion promoters or adhesives to the supporting structure beforehand; and then curing the mix. More specifically, the method according to the invention comprises the steps of: coining supporting structure 4 from sheet metal to form through perforations 20, 21 in respective peripheral portions 14, 15 of the supporting structure; molding elastomeric element 2, preferably by compression but also by injection, directly on to supporting structure 4 placed beforehand, with no adhesion promoter or adhesive coating, inside the mold of element 2; and curing the molded elastomeric element 2 to cross-link and set the elastomer. The molding step is performed in such a manner as to form retaining portions 22a,22b and 24a,24b on opposite faces 18, 19;to form relative braces 23, 25 inside perforations 20, 21; and to form brace/s 26 on face 19 to connect portions 22b to 24b. This is done simply using an appropriate mold impression, so that the liquid elastomer flows through perforations 20, 21 to form portions 22, 24, lip 3, connecting portion 11, and brace/s 26.

Peripheral annular portions 14, 15 are defined by respective annular edges 28, 29 of supporting structure 4 bent in the same axial direction; and perforations 20, 21 are formed at respective bend portions 30, 31 of respective edges 28, 29. According to the invention, braces 26 are formed on the face of supporting structure 4 facing the opposite way to the bend direction of edges 28, 29, so that edges 28, 29 (in radial section) are bent into an L and Z shape respectively, on the opposite side to face 19 and in the direction I (indicated by the arrow in the drawing) in which seal assembly 1 is inserted, in use, inside seat 8.

As stated, supporting structure 4 is made from sheet metal cut and coined to the shape described, with edges 28, 29 bent outside the plane of faces 18, 19, but may also be molded from rigid synthetic plastic. Whichever the case, while defining a -substantially rigid element (as compared with elastomeric element 2), supporting structure 4 has a certain amount of radial elasticity, also by virtue of the shape of edges 28, 29.

Designed as described, seal assembly 1 according to the invention therefore ensures perfect adhesion of sealing element 2, and in particular supporting portion 5 (the stiffness and stability of which largely account for the sealing performance of lip 3) to supporting structure 4, even without adhesives or other chemical means. That is, on the one hand, pairs of portions 22a,22b and 24a,24b grip supporting structure 4 and are connected integrally and inseparably to it by braces 23, 25, thus ensuring connection to supporting structure 4 of lip 3 and portion 11 for connection to seat 8; and, on the other, brace/s 26 provides/provide in use, through portions 22b, 24b, for radially tensioning supporting structure 4, which may flex by virtue of the shape of edges 28, 29, while still ensuring, even without adhesive, adhesion of brace/s 26 to face 19, integral connection of supporting structure 4 and supporting portion 5, and, therefore, excellent performance of lip 3.

## Claims

1. A seal assembly (1) comprising an elastomeric sealing element (2) having at least one sealing member (3); and a supporting structure (4) at least partly embedded in a supporting portion (5) of said elastomeric sealing element; the supporting structure (4) comprising a first (14) and a second (15) peripheral portion opposite each other, and opposite faces (18, 19) frontally defining said peripheral portions (14, 15), wherein said supporting structure (4) has first through perforations (20) formed through said first peripheral portion (14), and second through perforations (21) formed through said second peripheral portion (15); and wherein said supporting portion (5) of the elastomeric sealing element comprises: first retaining portions (22a, 22b) molded on to both said faces (18, 19) of said first peripheral portion (14) of the supporting structure; first braces (23) connecting the first retaining portions (22a; 22b) through said first through perforations (20); second retaining portions (24a, 24b) molded on to both said faces of said second peripheral portion (15) of the supporting structure; second braces (25) connecting said second retaining portions (24a; 24b) through said second through perforations (21); and at least one third brace (26) formed contacting at least one (19) of said faces to connect said first retaining portions (22b) to the second retaining portions (24b); said supporting structure (4) and said elastomeric sealing element (2) being annular; said faces (18, 19) being substantially radial, and defining said peripheral portions (14, 15) of the supporting structure, which are also annular and located radially outwards and radially inwards respectively of the supporting structure; said first and said second perforations (20, 21) being formed through said first and said second annular peripheral portion (14, 15) of the supporting structure in respective rings;
said seal assembly (1) being **characterized in that** said first and said second annular peripheral portion (14, 15) of said supporting structure are defined by respective annular edges (28, 29) of the supporting structure, bent in the same axial direction; said perforations (20, 21) being formed in respective bend portions (30, 31) of said annular edges (28, 29).

2. A seal assembly (1) as claimed in Claim 1, **characterized in that** said first and second braces (23, 25) are molded inside and fill said first and second perforations (20, 21); said at least one third brace (26) being molded to cover at least part of one said face (19).

3. A seal assembly (1) as claimed in Claim 1 or 2, **characterized in that** said supporting portion (5) of said elastomeric sealing element (2) is formed by molding a green elastomeric mix directly on to said supporting structure (4), without applying adhesion promoters or adhesives to the supporting structure beforehand; and by subsequently curing the mix.

4. A seal assembly (1) as claimed in any of the foregoing claims, **characterized in that** said at least one third brace (26) is formed on a face (19) of said supporting structure facing the opposite way to the bend direction of said annular edges (28, 29) of the supporting structure.

5. A seal assembly (1) as claimed in any of the foregoing claims, **characterized in that** said first annular peripheral portion (14) of the supporting structure is defined by a radially outer edge (28) of the supporting structure bent into the form of an L in the direction in which the seal assembly is inserted, in use, inside a respective seat (8); said second annular peripheral portion (15) of the supporting structure being defined by a radially inner edge (29) of the supporting structure bent substantially into the form of a Z in said direction in which the seal assembly is inserted, in use, inside the seat.

6. A seal assembly (1) as claimed in any of the foregoing claims, **characterized in that** said supporting structure (4) is coined from sheet metal.

7. A seal assembly (1) as claimed in any of the foregoing claims, **characterized in that** said elastomeric sealing element (2) comprises a connecting portion (11) for connection, in use, to a seat (9) of the seal assembly; a root portion (12) of said connecting portion comprising said first retaining portions (22a, 22b).

8. A low-cost method of producing a seal assembly (1) comprising an elastomeric sealing element, and a supporting structure at least partly embedded in a supporting portion of the elastomeric sealing element; comprising the steps of:
- forming respective through perforations (20, 21) in a first and a second peripheral portion (14, 15) of the supporting structure;
- molding said elastomeric sealing element (2) directly on to said supporting structure (4), without applying adhesion promoters or adhesives to the supporting structure beforehand; and
- curing said elastomeric sealing element (2);
wherein said molding step is performed in such a manner as to form, on opposite faces (18, 19) of said peripheral portions, respective retaining portions (22, 24) of said elastomeric sealing element (2); to form, through said perforations (20, 21), respective first (23) and second (25) braces connecting said retaining portions (22a,22b; 24a,24b) on the opposite faces (18, 19) of said first and second peripheral portion (14, 15) of the supporting structure respectively; and to form, on at least one (19) of said faces, at least one respective third brace (26) connecting the retaining portions (22b; 24b) of said first and second peripheral portion (14, 15) of the supporting structure; said supporting structure (4) and said elastomeric sealing element (2) being annular; said faces (18, 19) being substantially radial, and defining said peripheral portions (14, 15) of the supporting structure, which are also annular and located radially outwards and radially inwards respectively of the supporting structure; said first and said second perforations (20, 21) being formed through said first and said second annular peripheral portion (14, 15) of the supporting structure in respective rings; **characterized in that** said first and said second peripheral portion (14, 15) of said supporting structure are formed by bending respective annular edges (28, 29) of the supporting structure, which edges (28;29) are bent in the same axial direction; said perforations (20, 21) being formed in respective bend portions (30,31) of said annular edges (28, 29).

## Patentansprüche

1. Dichtungseinheit (1), die ein elastomeres Dichtungselement (2) mit mindestens einem Dichtungsteil (3) und eine mindestens teilweise in einem Stützabschnitt (5) des elastomeren Dichtungselements eingebettete Stützkonstruktion (4) umfaßt, wobei die Stützkonstruktion (4) einen ersten (14) und einen zweiten (15) Umfangsabschnitt, die einander gegenüberliegend vorgesehen sind, sowie gegenüberliegende Flächen (18, 19), die frontal die Umfangsabschnitte (14, 15) definieren, umfaßt, wobei die Stützkonstruktion (4) erste durchgehende Perforierungen (20), die durch den ersten Umfangsabschnitt (14) verlaufen, sowie zweite durchgehende Perforierungen (21), die durch den zweiten Umfangsabschnitt (15) verlaufen, aufweist, und wobei der Stützabschnitt (5) des elastomeren Dichtungselements folgendes umfaßt: an beiden Flächen (18, 19) des ersten Umfangsabschnitts (14) der Stützkonstruktion geformte erste Rückhalteabschnitte (22a, 22b), die ersten Rückhalteabschnitte (22a, 22b) durch die ersten durchgehenden Perforierungen (20) verbindende erste Klammern (23), an beiden Flächen des zweiten Umfangsabschnitts (15) der Stützkonstruktion geformte zweite Rückhalteabschnitte (24a, 24b), die zweiten Rückhalteabschnitte (24a, 24b) durch die zweiten durchgehenden Perforierungen (21) verbindende zweite Klammern (25) sowie mindestens eine dritte Klammer (26), die so ausgebildet ist, daß sie mindestens eine (19) der Flächen berührt, um die ersten Rückhalteabschnitte (22b) mit den zweiten Rückhalteabschnitten (24b) zu verbinden, wobei die Stützkonstruktion (4) und das elastomere Dichtungselement (2) ringförmig ausgeführt sind, die Flächen (18, 19) im wesentlichen radial vorgesehen sind und die Umfangsabschnitte (14, 15) der Stützkonstruktion definieren, die ebenfalls ringförmig ausgeführt sind und sich radial außerhalb bzw. radial innerhalb der Stützkonstruktion befinden, wobei die ersten und die zweiten Perforierungen (20, 21) so geformt sind, daß sie durch den ersten und den zweiten ringförmigen Umfangsabschnitt (14, 15) der Stützkonstruktion in jeweiligen Ringen verlaufen;
wobei die Dichtungseinheit (1) **dadurch gekennzeichnet ist, daß** der erste und der zweite ringförmige Umfangsabschnitt (14, 15) der Stützkonstruktion durch jeweilige, in der gleichen axialen Richtung gebogene ringförmige Kanten (28, 29) der Stützkonstruktion definiert sind und die Perforierungen (20, 21) in jeweiligen Biegeabschnitten (30, 31) der ringförmigen Kanten (28, 29) ausgebildet sind.

2. Dichtungseinheit (1) nach Anspruch 1, **dadurch gekennzeichnet, daß** die ersten und zweiten Klammern (23, 25) im Inneren der ersten und zweiten Perforierungen (20, 21) geformt sind und diese ausfüllen und daß die mindestens eine dritte Klammer (26) so geformt ist, daß sie mindestens einen Teil der Fläche (19) abdeckt.

3. Dichtungseinheit (1) nach Anspruch 1 oder 2, **dadurch gekennzeichnet, daß** der Stützabschnitt (5) des elastomeren Dichtungselements (2) **dadurch** gebildet ist, daß, ohne vorher Haftmittel oder Klebstoff auf die Stützkonstruktion aufzutragen, eine elastomere Rohmischung direkt auf der Stützkonstruktion (4) geformt wird und anschließend ein Aushärten der Rohmischung erfolgt.

4. Dichtungseinheit (1) nach einem der vorstehend aufgeführten Ansprüche, **dadurch gekennzeichnet, daß** mindestens eine dritte Klammer (26) an einer Fläche (19) der Stützkonstruktion in einer der Biegerichtung der ringförmigen Kanten (28, 29) der Stützkonstruktion entgegengesetzten Richtung ausgebildet ist.

5. Dichtungseinheit (1) nach einem der vorstehend aufgeführten Ansprüche, **dadurch gekennzeichnet, daß** der erste ringförmige Umfangsabschnitt (14) der Stützkonstruktion durch eine radial äußere Kante (28) der Stützkonstruktion definiert ist, die in der Form eines L in der Richtung gebogen ist, in der sich die Dichtungseinheit im Gebrauch im Inneren eines jeweiligen Sitzes (8) befindet, wobei der zweite ringförmige Umfangsabschnitt (15) der Stützkonstruktion durch eine radial innere Kante (29) der Stützkonstruktion definiert ist, die im wesentlichen in der Form eines Z in der Richtung gebogen ist, in der sich die Dichtungseinheit im Gebrauch im Inneren des Sitzes befindet.

6. Dichtungseinheit (1) nach einem der vorstehend aufgeführten Ansprüche, **dadurch gekennzeichnet, daß** die Stützkonstruktion (4) aus Blech geprägt ist.

7. Dichtungseinheit (1) nach einem der vorstehend aufgeführten Ansprüche, **dadurch gekennzeichnet, daß** das elastomere Dichtungselement (2) einen Verbindungsabschnitt (11) umfaßt, um im Gebrauch eine Verbindung mit einem Sitz (9) der Dichtungseinheit zu bewirken, wobei ein Wurzelabschnitt (12) des Verbindungsabschnitts die ersten Rückhalteabschnitte (22a, 22b) umfaßt.

8. Preisgünstiges Verfahren zur Herstellung einer Dichtungseinheit (1), die ein elastomeres Dichtungselement sowie eine mindestens teilweise in einem Stützabschnitt des elastomeren Dichtungselements eingebettete Stützkonstruktion umfaßt, wobei das Verfahren folgende Schritte umfaßt:
Ausbilden jeweiliger durchgehender Perforierungen (20, 21) in einem ersten und einem zweiten Umfangsabschnitt (14, 15) der Stützkonstruktion;
Formen des elastomeren Dichtungselements (2) direkt auf der Stützkonstruktion (4), ohne vorher Haftmittel oder Klebstoffe auf der Stützkonstruktion aufzubringen; und
Aushärten des elastomeren Dichtungselements (2);
wobei der Schritt des Formens so durchgeführt wird, daß auf gegenüberliegenden Flächen (18, 19) der Umfangsabschnitte jeweilige Rückhalteabschnitte (22, 24) des elastomeren Dichtungselements (2) ausgebildet werden, durch die Perforierungen (20, 21) jeweilige erste (23) und zweite (25) Klammern zur Verbindung der Rückhalteabschnitte (22a, 22b; 24a, 24b) an den gegenüberliegenden Flächen (18, 19) des ersten bzw. des zweiten Umfangsabschnitts (14, 15) der Stützkonstruktion ausgebildet werden sowie an mindestens einer (19) der Flächen mindestens eine jeweilige dritte Klammer (26) zur Verbindung der Rückhalteabschnitte (22b; 24b) des ersten und des zweiten Umfangsabschnitts (14, 15) der Stützkonstruktion ausgebildet wird, wobei die Stützkonstruktion (4) und das elastomere Dichtungselement (2) ringförmig ausgebildet und die Flächen (18, 19) im wesentlichen radial vorgesehen sind und die Umfangsabschnitte (14, 15) der Stützkonstruktion definieren, die ebenfalls ringförmig ausgebildet sind und sich radial außerhalb bzw. radial innerhalb der Stützkonstruktion befinden, wobei die ersten und die zweiten Perforierungen (20, 21) so ausgebildet sind, daß sie durch den ersten und den zweiten ringförmigen Umfangsabschnitt (14, 15) der Stützkonstruktion in jeweiligen Ringen verlaufen, **dadurch gekennzeichnet, daß** der erste und der zweite Umfangsabschnitt (14, 15) der Stützkonstruktion durch Biegung jeweiliger' ringförmiger Kanten (28, 29) der Stützkonstruktion ausgebildet sind, wobei die Kanten (28, 29) in der gleichen axialen Richtung gebogen und die Perforierungen (20, 21) in jeweiligen Biegeabschnitten (30, 31) der ringförmigen Kanten (28, 29) ausgebildet sind.

## Revendications

1. Dispositif d'étanchéité (1) comprenant un élément d'étanchéité élastomère (2) comportant au moins un organe d'étanchéité (3) ; et une structure support (4) au moins partiellement noyée dans une portion support (5) dudit élément d'étanchéité élastomère ; la structure support (4) comprenant une première (14) et une seconde (15) portions périphériques opposées l'une à l'autre, et les faces opposées (18, 19) définissant de manière frontale lesdites portions périphériques (14, 15), ladite structure support (4) comportant des premières perforations traversantes (20) formées à travers ladite première portion périphérique (14), et des secondes perforations traversantes (21) formées à travers ladite seconde portion périphérique (15) ; et ladite portion support (5) de l'élément d'étanchéité élastomère comportant : des premières portions de retenue (22a, 22b) moulées sur les deux dites faces (18, 19) de ladite première portion périphérique (14) de la structure support ; des premières entretoises (23) reliant les premières portions de retenue (22a ; 22b) à travers lesdites premières perforations traversantes (20) ; des secondes portions de retenue (24a, 24b) moulées sur les deux dites faces de ladite seconde portion périphérique (15) de la structure support ; des secondes entretoises (25) reliant lesdites secondes portions de retenue (24a, 24b) à travers lesdites secondes perforations traversantes (21) ; et au moins une troisième entretoise (26) formée au contact d'au moins l'une (19) desdites faces pour relier lesdites premières portions de retenue (22b) aux secondes portions de retenue (24b) ; ladite structure support (4) et ledit élément d'étanchéité élastomère (2) étant annulaires ; lesdites faces (18, 19) étant sensiblement radiales et définissant lesdites portions périphériques (14, 15) de la structure support, qui sont également annulaires et respectivement situées radialement vers l'extérieur et radialement vers l'intérieur de la structure support ; lesdites premières et secondes perforations (20, 21) étant formées à travers ladite première et ladite seconde portion périphérique annulaire (14, 15) de la structure support dans des bagues respectives ;
ledit dispositif d'étanchéité (1) étant **caractérisé en ce que** ladite première et ladite seconde portion périphérique annulaire (14, 15) de ladite structure support sont définies par des bords annulaires respectifs (28, 29) de la structure support, recourbés dans la même direction axiale ; lesdites perforations (20, 21) étant formées dans des portions coudées respectives (30, 31) desdits bords annulaires (28, 29).

2. Dispositif d'étanchéité (1) selon la revendication 1, **caractérisé en ce que** lesdites première et seconde entretoises (23, 25) sont moulées à l'intérieur et remplissent lesdites premières et secondes perforations (20, 21) ; ladite au moins troisième entretoise (26) étant moulée pour couvrir au moins une partie d'une dite face (19).

3. Dispositif d'étanchéité (1) selon la revendication 1 ou 2, **caractérisé en ce que** ladite portion support (5) dudit élément d'étanchéité élastomère (2) est formée par moulage d'un mélange élastomère vert directement sur ladite structure support (4), sans application préalable de promoteurs d'adhésion ou d'adhésifs sur la structure support ; et par vulcanisation subséquente du mélange.

4. Dispositif d'étanchéité (1) selon l'une quelconque des revendications précédentes, **caractérisé en ce que** ladite au moins troisième entretoise (26) est formée sur une face (19) de ladite structure support située en regard de la direction opposée au sens de courbure desdits bords annulaires (28, 29) de la structure support.

5. Dispositif d'étanchéité (1) selon l'une quelconque des revendications précédentes, **caractérisé en ce que** ladite première portion périphérique annulaire (14) de la structure support est définie par un bord radialement extérieur (28) de la structure support recourbé en forme de L dans une direction dans laquelle le dispositif d'étanchéité est inséré, en cours d'utilisation, à l'intérieur d'un logement respectif (8) ; ladite seconde portion périphérique annulaire (15) de la structure support étant définie par un bord radialement intérieur (29) de la structure support, recourbé sensiblement en forme de Z dans ladite direction dans laquelle le dispositif d'étanchéité est inséré, en cours d'utilisation, à l'intérieur du logement.

6. Dispositif d'étanchéité (1) selon l'une quelconque des revendications précédentes, **caractérisé en ce que** ladite structure support (4) est frappée dans de la tôle métallique.

7. Dispositif d'étanchéité (1) selon l'une quelconque des revendications précédentes, **caractérisé en ce que** l'élément d'étanchéité élastomère (2) comporte une portion de liaison (11) pour raccordement, en cours d'utilisation, à un logement (9) du dispositif d'étanchéité ; une portion de racine (12) de ladite portion de liaison comportant lesdites premières portions de retenue (22a, 22b).

8. Une méthode de fabrication à faible coût d'un système d'étanchéité (1) comportant un élément d'étanchéité élastomère, et une structure support au moins partiellement noyée dans une portion support de l'élément d'étanchéité élastomère ; dont les étapes consistent à :
- former des perforations traversantes respectives (20, 21) dans une première et une seconde portion périphérique (14, 15) de la structure support ;
- mouler ledit élément d'étanchéité élastomère (2) directement sur ladite structure support (4), sans application préalable de promoteurs d'adhésion ou adhésifs sur la structure support ;
- vulcaniser ledit élément d'étanchéité élastomère (2) ;
dans laquelle ladite étape de moulage est réalisée de manière à former, sur les faces opposées (18, 19) desdites portions périphériques, des portions de retenue respectives (22, 24) dudit élément d'étanchéité élastomère (2) ; à former, à travers lesdites perforations (20, 21), des premières (23) et secondes (25) entretoises reliant lesdites portions de retenue (22a, 22b ; 24a , 24b) sur les faces opposées (18, 19) respectivement de ladite première et seconde portion périphérique (14, 15) de la structure support ; et à former, sur au moins l'une (19) desdites faces, au moins une troisième entretoise respective (26) reliant les portions de retenue (22b ; 24b) de ladite première et seconde portion périphérique (14, 15) de la structure support ; ladite structure support (4) et ledit élément d'étanchéité élastomère (2) étant annulaires ; lesdites faces (18, 19) étant sensiblement radiales, et définissant lesdites portions périphériques (14, 15) de la structure support, qui sont également annulaires et situées respectivement radialement vers l'extérieur et radialement vers l'intérieur de la structure support ; lesdites premières et lesdites secondes perforations (20, 21) étant formées à travers ladite première et ladite seconde portion annulaire périphérique (14, 15) de la structure support dans des bagues respectives ; **caractérisée en ce que** ladite première et ladite seconde portion annulaire périphérique (14, 15) de ladite structure support sont formées par cintrage des bords annulaires respectifs (28, 29) de la structure support, lesquels bords (28, 29) sont recourbés dans la même direction axiale ; lesdites perforations (20, 21) étant formées dans des portions coudées respectives (30, 31) desdits bords annulaires (28, 29).
